# EUROPÄISCHE PATENTANMELDUNG

(11) **EP 2 056 024 A1**
(43) Veröffentlichungstag der Anmeldung: **06.05.2009**
(21) Anmeldenummer: 08019211.5
(22) Anmeldetag: 03.11.2008
(51) Int. Cl.: F24D 3/14

(54) **Flächenheizung, insbesondere Fußbodenheizung**

(30) Priorität: 02.11.2007 DE 202007015294 U
(71) Anmelder: Hohlwein, Jörg, 66333 Völklingen (DE)
(72) Erfinder: Hohlwein, Jörg, 66333 Völklingen (DE)
(74) Vertreter: Schöneborn, Holger

(57) **Zusammenfassung**

Die Erfindung betrifft eine Flächenheizung mit in der zu beheizenden Fläche einzubettenden vorgefertigten Heizelementen, die jeweils eine Trägermatte (1) aufweisen, auf der eine mäanderförmig verlaufende Heizschlange (2) mit einer Vielzahl von parallel zueinander verlaufenden Heizschlangenabschnitten (2a) angeordnet ist, wobei die Abstände (a, b) zwischen den parallel zueinander verlaufenden Heizschlangenabschnitten (2a) aufeinanderfolgend abwechselnd groß und klein sind, derart, dass bei überlappender Verlegung von zwei Heizungselementen die Mäanderbögen (2c) eines Heizelements zwischen die Mäanderbögen (2b) des überlappten Heizelements passen. Mit Hilfe der Erfindung ist es möglich, die Flächenheizung an die zu beheizende Fläche anzupassen, ohne dass in der vorgegebenen Verlegefläche Lücken verbleiben. Darüber hinaus kann bei Bedarf die pro Flächeneinheit zur Verfügung gestellte Wärmemenge gezielt erhöht werden.

## Beschreibung

Die Erfindung betrifft eine Flächenheizung, insbesondere Fußbodenheizung mit in der zu beheizenden Fläche eingebetteten, vorgefertigten Heizelementen, die jeweils ein Trägermatte aufweisen, auf der eine mäanderförmig verlaufende Heizschlange mit einer Vielzahl von parallel zueinander verlaufenden Heizschlangenabschnitten angeordnet ist.

Derartige Flächenheizungen, die insbesondere für nachträglich zu installierende Fußbodenheizungen verwendet werden, sind beispielsweise aus der DE 28 15 416 A1 oder der EP 0 816 764 B2 bekannt.

Ein Vorteil der bekannten Flächenheizungen der genannten Art besteht darin, dass die aus Trägermatte und Heizschlangen bestehenden Heizelemente endlos gefertigt und zu einer Rolle aufgerollt am Verlegeort angeliefert werden können, um dort in passende Verlegeabschnitte aufgeteilt, verlegt und wärmetechnisch angeschlossen zu werden.

Ein Problem besteht allerdings darin, dass die aus Trägermatte und Heizschlange bestehenden vorgefertigten Heizelemente von den Abmessungen her nicht passend sind, so dass beim Verlegen auf einer vorgegebenen Verlegefläche Lücken verbleiben, die entweder unbeheizt bleiben oder nachträglich mit individuell verlegten zusätzlichen Heizschlangen geschlossen werden müssen.

Es ist deshalb Aufgabe der Erfindung, die Flächenheizung der eingangs genannten Art dahingehend weiterzubilden, dass die von den Heizelementen abgedeckte Fläche besser an die vorhandene Verlegefläche angepasst werden kann.

Zur Lösung dieser Aufgabe schlägt die Erfindung ausgehend von der Flächenheizung der eingangs genannten Art vor, dass die Abstände zwischen den parallel zueinander verlaufenden Heizschlangenabschnitten aufeinander folgend abwechselnd groß und klein sind, derart, dass bei überlappender Verlegung von zwei Heizelementen die Mäanderbögen der Heizschlange zwischen die Mäanderbögen des überlappten Heizelementes passen.

Die Erfindung macht es erstmals möglich, die endlos gefertigten Heizelemente der Flächenheizung im Bedarfsfall auch mehr oder weniger überlappend zu verlegen, so dass ohne weiteres eine Anpassung an die jeweils zu beheizende Fläche möglich ist. Ein weiterer Vorteil besteht darin, dass man durch sich überlappende Heizelemente im Bedarfsfall die pro Flächeneinheit zur Verfügung gestellte Wärmemenge gezielt erhöhen kann. So ist es beispielsweise möglich, in einem Badezimmer die regelmäßig mit nackten Füßen betretenen Fußbodenbereiche stärker zu beheizen als die übrigen Flächen des Fußbodens. Dies geschieht dadurch, dass in diesen Fußbodenbereichen die Heizelemente überlappend verlegt werden.

Eine besonders bevorzugte Ausführungsform der Erfindung sieht vor, dass die Trägermatte als offen strukturiertes Gitter aus Textil oder Kunststoff ausgebildet ist. Diese offene Gitterstruktur der Trägermatte stellt sicher, dass die im Überlappungsbereich übereinander liegenden Trägermatten vollständig und lückenlos in die Einbettungsmasse eingebettet werden. Gitter aus Textil oder Kunststoff sind besonders biegsam und damit anpassungsfähig.

Alternativ ist die Trägermatte als offen strukturiertes Gitter aus Metall, insbesondere aus Kupfer ausgebildet. Gitter aus Metall, insbesondere aus Kupfer haben den Vorteil einer guten Wärmeleitfähigkeit. Solche Gitter aus Metall sind deshalb besonders für eine gleichmäßige Wärmeverteilung nützlich.

Ausführungsbeispiele einer Flächenheizung gemäß der Erfindung werden im Folgenden anhand der beigefügten Zeichnung näher erläutert. Es zeigen:

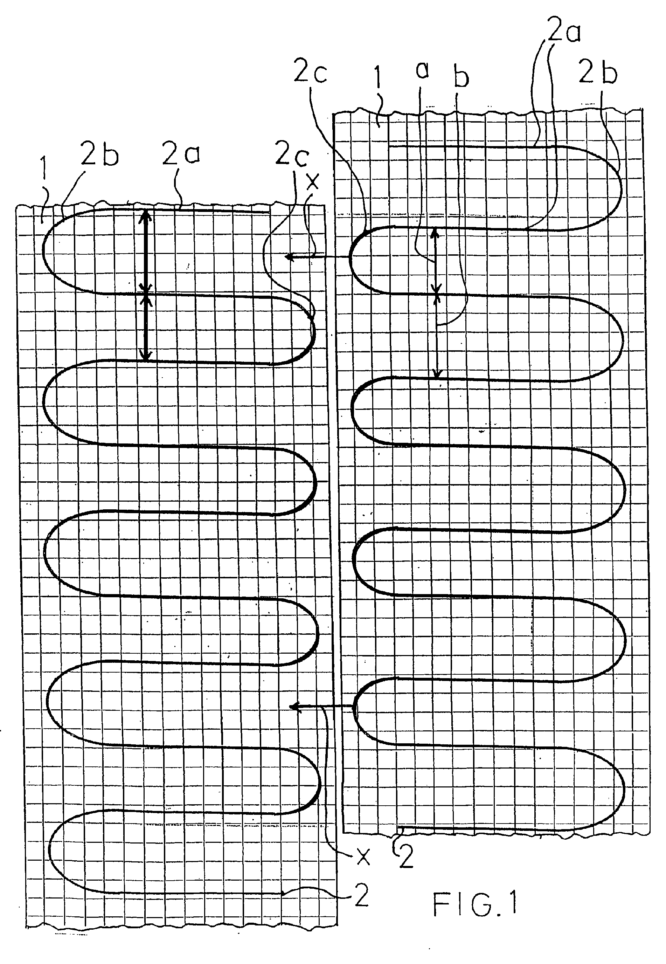

- Fig. 1:: Zwei nebeneinander angeordnete, vorgefertigte Heizelemente einer Flächenheizung gemäß der Erfindung in Draufsicht;

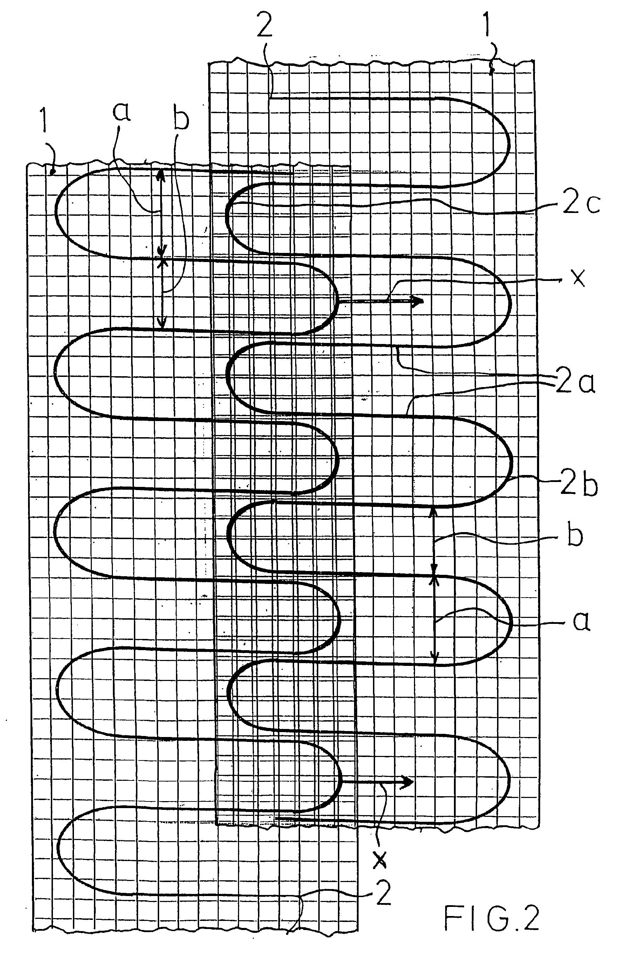

- Fig. 2:: zwei teilweise überlappend angeordnete, vorgefertigte Heizelemente gemäß der Erfindung in Draufsicht;

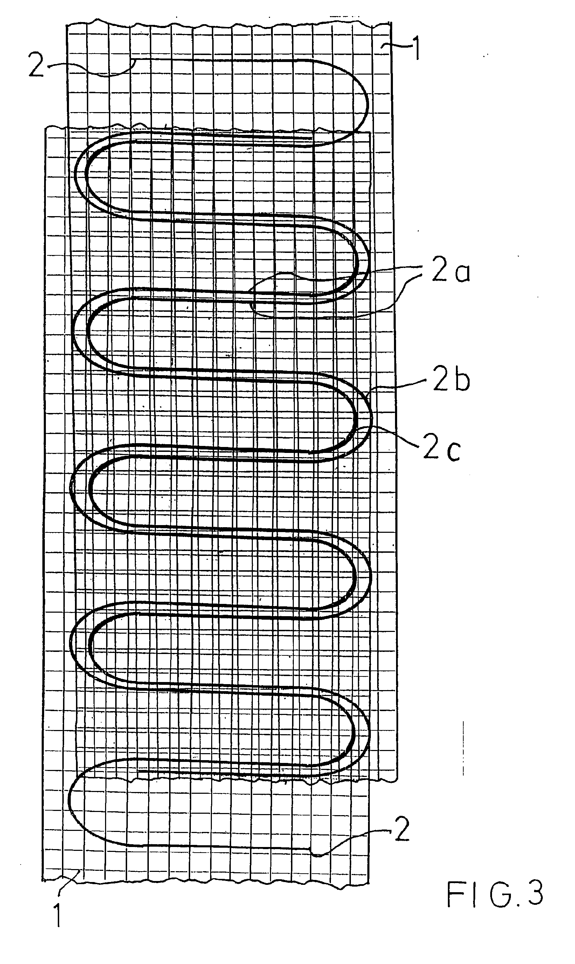

- Fig. 3:: zwei weitestgehend überlappend angeordnete, vorgefertigte Heizelemente gemäß der Erfindung in Draufsicht.

Die beiden in der Zeichnung dargestellten Heizelemente weisen jeweils eine mit dem Bezugszeichen 1 bezeichnete Trägermatte auf. Diese Trägermatte 1 ist ein offen strukturiertes Gitter aus Textil, Kunststoff oder Kupferdraht und beim Ausführungsbeispiel 500 mm breit und - weil endlos gefertigt und auf die jeweils gewünschte Länge abgeschnitten - beliebig lang. An der Trägermatte 1 ist eine mäanderförmig verlaufende Heizschlange 2 befestigt. Diese Heizschlange hat eine Vielzahl von parallel zueinander verlaufenden Heizschlangenabschnitten 2a, die aufeinander folgend durch Mäanderbögen 2b und 2c verbunden sind.

Die Heizschlange 2 besteht aus einem biegsamen Kunststoffrohr mit einem Durchmesser von 8 bis 10 mm und ist aus einem wärmeleitenden Kunststoff hergestellt, beispielsweise Polyethylen (PE), Polypropylen (PP) oder Polyurethan (PU). Durch die Heizschlangen 2 wird ein Wärmeträgermedium geleitet, in der Regel Wasser. Alternativ kann die Heizschlange 2 auch aus einem isolierten elektrischen Widerstandsheizdraht bestehen. Ein solcher Widerstandsheizdraht kann im Bedarfsfall auch mit einem Kunststoffrohr kombiniert werden. Das hat dann den Vorteil, dass man auch außerhalb der Heizperiode, wenn die Warmwasserheizung außer Betrieb ist, den Fußboden elektrisch beheizen kann.

Erfindungsgemäß sind die Abstände a und b zwischen den parallel zueinander verlaufenden Heizschlangenabschnitten 2a aufeinander folgend abwechselnd groß und klein. Beim Ausführungsbeispiel betragen die Abstände a beispielsweise 130 mm und die Abstände b 90 mm. Diesen abwechselnden Abständen a und b folgend sind auch die aufeinander folgenden Mäanderbögen 2b und 2c abwechselnd breit (Mäanderbögen 2b) und schmal (Mäanderbögen 2c).

Wie in der Zeichnung durch die Pfeile x angedeutet, können die beiden Heizelemente gegeneinander verschoben und mehr oder weniger überlappend verlegt werden, wobei aufgrund der oben dargelegten Abmessungsverhältnisse die schmalen Mäanderbögen 2c des ersten Heizelementes zwischen die breiten Mäanderbögen 2b des anderen Heizelementes passen. Auf diese Weise kann die Gesamtbreite der beiden Heizelemente je nach Überlappungsgrad zwischen 550 mm und 1000 mm variiert werden. Dabei ist wichtig, dass die Heizelemente identisch ausgebildet sind und dementsprechend von der gleichen endlos gefertigten Rolle abgetrennt werden. Durch unterschiedliche Überlappungen ist es auch möglich, die pro Flächeneinheit zugeführte Wärmemenge dem Bedarf anzupassen.

Für die Verlegung ist noch wichtig, dass die Heizschlangen 2 lösbar an den Trägermatten 1 befestigt sind. Hierdurch ist es möglich, die Enden der Heizschlangen 2 von den Trägermatten 1 abzulösen und an das Warmwasser- bzw. Stromversorgungssystem anzuschließen.

## Patentansprüche

1. Flächenheizung mit in der zu beheizenden Fläche einzubettenden, vorgefertigten Heizelementen, die jeweils eine Trägermatte (1) aufweisen, auf der eine mäanderförmig verlaufende Heizschlange (2) mit einer Vielzahl von parallel zueinander verlaufenden Heizschlangenabschnitten (2a) angeordnet ist, **dadurch gekennzeichnet, dass** die Abstände (a, b) zwischen den parallel zueinander verlaufenden Heizschlangenabschnitten (2a) aufeinander folgend abwechselnd groß und klein sind, derart, dass bei überlappender Verlegung von zwei Heizungselementen die Mäanderbögen (2c) eines Heizelementes zwischen die Mäanderbögen (2b) des überlappten Heizelementes passen.

2. Flächenheizung nach Anspruch 1, **dadurch gekennzeichnet, dass** die Heizschlange (2) lösbar an der Trägermatte (1) befestigt ist.

3. Flächenheizung nach Anspruch 1, **dadurch gekennzeichnet, dass** die Trägermatte (1) als offen strukturiertes Gitter aus Textil oder Kunststoff ausgebildet ist.

4. Flächenheizung nach Anspruch 1, **dadurch gekennzeichnet, dass** die Trägermatte (1) als offen strukturiertes Gitter aus Metall, insbesondere aus Kupfer ausgebildet ist.

5. Flächenheizung nach Anspruch 1, **dadurch gekennzeichnet, dass** die Heizschlange (2) als Warmwasser-Heizrohr ausgebildet ist.

6. Flächenheizung nach Anspruch 1, **dadurch gekennzeichnet, dass** die Heizschlange (2) ein elektrischer Widerstandsheizdraht ist.

7. Flächenheizung nach Anspruch 1, **dadurch gekennzeichnet, dass** die Heizschlange (2) als Kombination aus Warmwasser-Heizrohr und Widerstandsheizdraht ausgebildet ist.
